Europäisches Patentamt

European Patent Office

Office européen des brevets

(19)

(11) Veröffentlichungsnummer: **0 147 662**
**B1**

# (12) EUROPÄISCHE PATENTSCHRIFT

(45) Veröffentlichungstag der Patentschrift:
**03.06.87**

(51) Int. Cl.⁴: **F 16 F 1/38**, B 60 G 7/02

(21) Anmeldenummer: **84114507.1**

(22) Anmeldetag: **29.11.84**

(54) **Elastisches Lager mit Zwangsführung.**

(30) Priorität: **23.12.83 DE 3346665**

(43) Veröffentlichungstag der Anmeldung:
**10.07.85 Patentblatt 85/28**

(45) Bekanntmachung des Hinweises auf die Patenterteilung:
**03.06.87 Patentblatt 87/23**

(84) Benannte Vertragsstaaten:
**FR GB IT SE**

(56) Entgegenhaltungen:
**DE - A - 3 240 981**
**FR - A - 2 335 744**
**US - A - 3 115 375**

**AUTOMOBILTECHNISCHE ZEITSCHRIFT, Band 83, Nr. 1, Januar 1981, Seiten 3-7, Schwäbisch Gmünd, DE; D. BANHOLZER u.a.: "Die neue Hinterachs-Generation im VW Passat"**

(73) Patentinhaber: **Lemförder Metallwaren AG, Postfach 1220, D-2844 Lemförde (DE)**

(72) Erfinder: **Münch, Günter, Bergstrasse 53, D-2845 Damme (DE)**

**Beschreibung**

Die Erfindung betrifft ein elastisches Lager mit einem zwischen einer äusseren Hülse und einer rohrförmigen inneren Hülse eingespannten Gelenkkörper aus elastischem Werkstoff, der in seiner Ursprungsform aussen etwa zylindrisch ist, an seinen Stirnseiten partiell hohle bis in die Gelenkmitte reichende Ausformungen in zueinander winkelversetzter Anordnung aufweist und im Bereich des diesen Ausformungen parallel zur Gelenkachse gegenüberliegenden vollen Materials vorgespannt ist.

Ein solches Lager ist aus der FR-A-2 335 744 bekannt. Es ist insbesondere für die schwenkbare Anlenkung eines Radführungslenkers am Aufbau eines Kraftfahrzeuges bestimmt. Es muss die beim Ein- und Ausfedern der Räder auftretenden Schwenkbewegungen der Radführungsglieder durch Scherung des Gelenkkörperwerkstoffes aufnehmen und die bei scheinbar gleichbleibender Fahrzeuggeschwindigkeit verursachten Vibrationen kompensieren. Das Lager soll aber auch das Eigenlenkverhalten des Fahrzeugs bei Kurvenfahrt und bei Lastwechsel beeinflussen, um dadurch z.B. der Neigung zur Übersteuerung in der Kurvenfahrt entgegenzuwirken.

Zur Erreichung der angestrebten Zwangsführung kardanischer Auslenkbewegungen unter Last sind bei der aus der DE-A-2 838 397 bekannten Ausführung die dem elastischen Gelenkkörper, welcher zwischen einer äusseren und einer inneren Metallbüchse eingespannt ist, zugewandten Mantelflächen der beiden Metallbüchsen teilweise trompetenförmig schräg zur Lagerachse angeordnet, so dass die Büchsen beim Einleiten von Axialkräften in das Lager gezielt in eine vorbestimmte Richtung radial gegeneinander verschoben werden. Bei entsprechender Anpassung der beiden Anlenkstellen der Radführungsglieder am Aufbau kann dadurch auch eine gewünschte Verschwenkung der Radführungsglieder hervorgerufen werden. Zur Erreichung dieser Wirkungen sind bei der bekannten Anordnung unregelmässige Formen der Metallbüchsen und des Gelenkkörpers aus Gummi, in aller Regel sogar mehrerer Gummikörper unregelmässiger Form, in einem Gelenk erforderlich. Daraus folgt, dass für jeden spezifischen Anwendungsfall ein Gelenk mit genau konturierten Formen entwickelt werden muss, welches relativ grosse Abmessungen aufweist.

Der Erfindung liegt die Aufgabe zugrunde, ein Gelenk mit den Vorteilen der Anordnungen nach dem Stande der Technik in der Weise weiter zu entwickeln, dass es bei geringstmöglichen Abmessungen in grossen Stückzahlen kostengünstig mit variablen Abmessungen für unterschiedliche Belastungsfälle herstellbar, montagefreundlich und wartungsfrei ist.

Diese Aufgabe wird nach dem Patentanspruch 1 im wesentlichen dadurch gelöst, dass die innere Hülse in der Gelenkmitte eine sich nach beiden Seiten verjüngende Ausweitung aufweist und dass eine die Vorspannung von aussen bewirkende Schrägfläche an der äusseren Hülse und die Verjüngung der Ausweitung der inneren Hülse im Schnitt durch eine Achsebene des Gelenkes etwa parallel zueinander verlaufen.

Ausgangspunkt für die Herstellung des Gelenks nach der Erfindung sind im wesentlichen zylindrische Rohrkörper für die Aussenhülse und für die Innenhülse sowie ein in seiner Ursprungsform vor der Gelenkmontage ebenfalls zylindrischer Gelenkkörper aus elastischem Werkstoff, der entsprechend einfach in einer einfachen Form herstellbar ist. Vor der Montage haben daher auch die Wandungen der hohlen Ausformungen einen zur Achse zylindrischen Verlauf. Die hohlen Ausformungen können als Sackloch ausgeführt oder am Aussenumfang des Gelenkkörpers offen gestaltet sein, womit eine weitere Herstellungsvereinfachung erreicht wird. Die Vorspannung des elastischen Gelenkkörpers im Bereich des vollen Materials kann durch Kalibrieren der ässeren Hülse und ggf. durch zusätzliches Anprägen von Schrägen an beiden Enden erzielt werden. Dadurch erfolgt eine Verkantung der inneren Hülse über die Längsachse im geometrischen Mittelpunkt, welche bei der späteren Montage des Gelenkes im Fahrzeug in die vorgesehene Aufnahme wieder ausgerichtet wird und somit zu der gewünschten Vorspannung des Gelenkkörpers führt. Anstelle der Kalibrierung und der Anprägung von Schrägen können nach dem Patentanspruch 2 im Achsschnitt konische Formringe in die Enden der äusseren Hülse axial eingepresst werden, wie es zur Erzielung von Vorspannung elastomerer Gelenkkörper an sich bekannt ist. Diese Formringe weisen eine innere ringförmige Schrägfläche auf, die in Schnitten durch die Achsebene parallel zu den Schrägflächen an den Ausweitungen der inneren Hülse liegt. Zu den wesentlichen Vorteilen gehört es, dass das erfindungsgemäss gestaltete Gelenk zu einer besseren Spannungsverteilung im Gelenkkörper und zur Vermeidung von Zugspannungen im Gelenkkörpermaterial und dadurch zu einer Erhöhung der Lebensdauer führt.

Nach einem weiterführenden Gedanken sind an den Stirnseiten des Gelenklagers in Achsrichtung ausserhalb der Enden der äusseren Hülse elastische Anschläge aus elastischem Werkstoff vorgesehen, die vorteilhaft ringsegmentförmig ausgebildet und an Teilen des Gelenkkörpers aus elastischem Werkstoff angeformt sind. Diese Anschläge verhindern harte Berührungen der äusseren Hülse mit den Karosserieteilen, an denen die innere Hülse befestigt ist, bei starken Auslenkbewegungen.

In der Zeichnung sind mehrere Ausführungsbeispiele dargestellt, die nachfolgend in Verbindung mit weiteren Besonderheiten der Erfindung erläutert werden.

Es zeigen:

Fig. 1 einen Längsschnitt eines Gelenklagers in der Ebene der Lagerachse,

Fig. 2 einen Querschnitt nach der Linie II-II der Fig. 1,

Fig. 3 einen Längsschnitt durch ein abgeändertes Ausführungsbeispiel,

Fig. 4 einen Querschnitt nach der Linie IV-IV der Fig. 3,

Fig. 5 einen Längsschnitt durch ein weiteres Ausführungsbeispiel,

Fig. 6 eine Stirnansicht von oben auf Fig. 5 in der Zeichnung,

Fig. 7 einen Längsschnitt des Gelenklagers entsprechend Fig. 5 beim Einbau in das Fahrzeug vor der Befestigung der inneren Hülse und

Fig. 8 eine Stirnansicht von oben auf Fig. 7 in der Zeichnung.

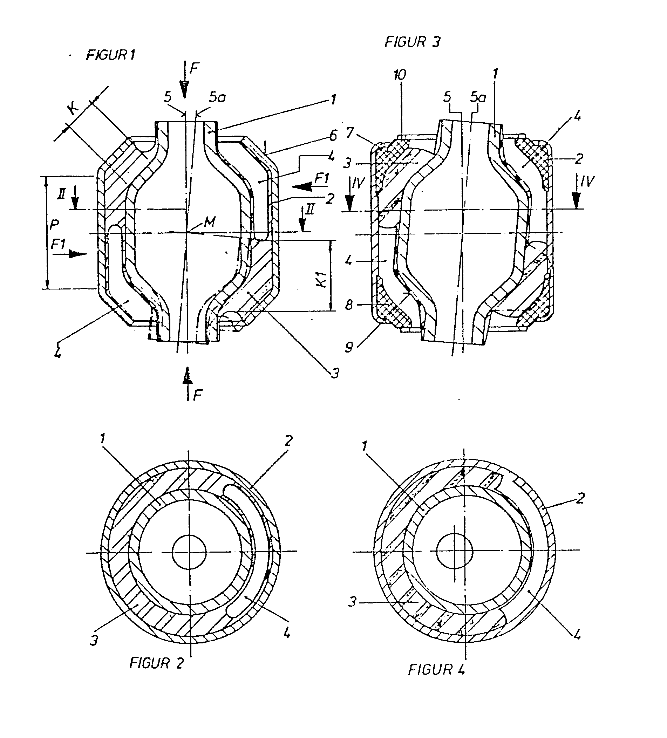

In den Ausführungsbeispielen besteht das Gelenklager aus einer inneren Hülse 1, einer äusseren Hülse 2 und einem dazwischen eingespannten Gelenkkörper 3 aus einem elastischen Werkstoff. Die beiden Hülsen 1 und 2 werden vorwiegend aus Stahl, der Gelenkkörper 3 aus Kautschuk oder einem Kunststoff mit vergleichbaren Eigenschaften hergestellt. Je nach gewählter Ausführungsart kann der Gelenkkörper 3 mit dem Aussenmantel der inneren Hülse 1 und dem Innenmantel der äusseren Hülse 2 fest verbunden, z.B. anvulkanisiert sein. Um zu erreichen, dass bei Lastbeaufschlagung in axialer Richtung die Längsachse mit der inneren Hülse 1 aus dem geometrischen Mittelpunkt des Lagers zwangsverschoben wird, ist der in seiner Ursprungsform aussen etwa zylindrische Gelenkkörper 3 an seinen Stirnseiten partiell mit hohlen bis in die Gelenkmitte reichenden Ausformungen 4 in zueinander winkelversetzter Anordnung ausgestattet und im Bereich K1 des diesen Ausformungen 4 parallel zur Gelenkachse 5 gegenüberliegenden vollen Materials vorgespant. Bei dem Ausführungsbeispiel nach den Fig. 1 und 2 sind die hohlen Ausformungen 4 bei einem in seiner Ursprungsform etwa zylindrischen Gelenkkörper 3 als Sackausnehmungen mit etwa zylindrischen Wandungen ausgeführt, deren Boden etwa in der Gelenkmitte liegt. Die Vorspannung des Gelenkkörpers im Bereich des vollen Materials ist im Falle des Ausführungsbeispieles nach den Fig. 1 und 2 durch Kalibrieren der äusseren Hülse 2 und durch zusätzliches Anprägen von Schrägen 6 im Bereich K erzielt worden. Ausserdem ist die innere Hülse 1 mit einer sich nach beiden Seiten verjüngenden Aufweitung versehen, so dass die die Vorspannung von aussen bewirkende Schrägfläche 6 der äusseren Hülse 2 und die Verjüngung der inneren, nach Art eines Trägerrohres ausgebildeten Hülse 1 im Schnitt durch eine Achsebene des Lagers etwa parallel zueinander verlaufen. Dadurch wird innerhalb des Vorspannungsbereiches K1 ein Kompaktbereich K gebildet. Die in der Zeichnung dargestellte symmetrische Ausbildung des Lagers hat unter Belastung in beiden axialen Richtungen gleiche Wirkung und gleiche Kennung. Bei der Montage des Lagers ist nur auf die richtige Winkellage der zum kardanischen Auslenken benötigten, etwa sich über einen Umfangsbereich von 180° erstreckenden und bis zur Mitte des Lagers reichenden Ausformungen 4 zu achten. Mit den strichpunktierten Linien in Fig. 1 ist die Lage der inneren Hülse 1 vor der Montage des unbelasteten Lagers eingezeichnet. Die vollen Linien der inneren Hülse 1 zeigen die vorgesehene Aufnahme, in die die innere Hülse 1 bei der Montage ausgerichtet wird.

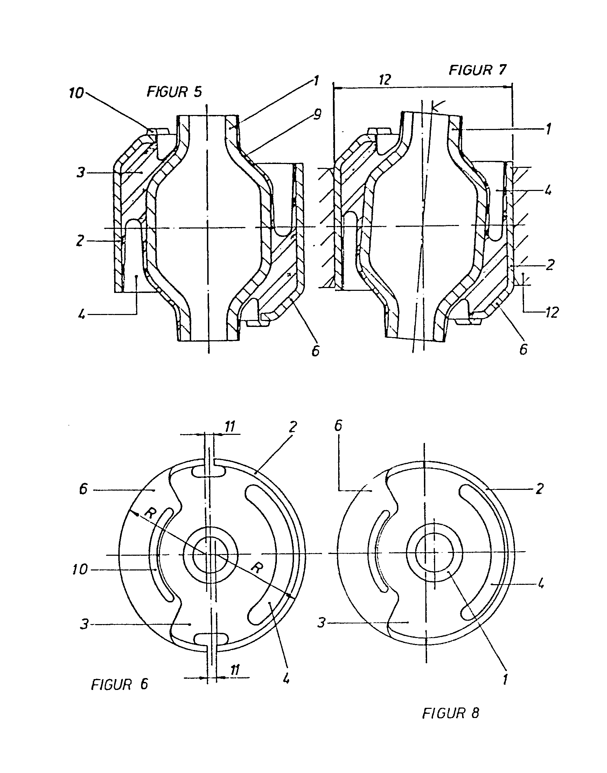

Bei dem Ausführungsbeispiel der Fig. 3 und 4 entspricht die Ausbildung der inneren Hülse 1 dem Beispiel in den Fig. 1 und 2. In die äussere Hülse 2 sind von den Enden her Formringe 7 und 8 eingepresst und durch Umbördelung der Ränder der äusseren Hülse 2 gehalten. Diese Formringe 7 und 8 entsprechen den angeprägten Schrägen 6, wie sie zu dem Beispiel der Fig. 1 und 2 erläutert wurden. Ausserdem ist in den Fig. 3 und 4 dargestellt, dass die hohlen Ausformungen am Aussenumfang offen gestaltet sein können, so dass sich lediglich eine Strumpfmanschette 9 an den Kompaktbereich des vollen Materials des Gelenkkörpers 3 anschliesst. An den Enden des Lagers sind die Formringe 7 und 8 aus der äusseren Hülse 2 herausgeführt und mit einem elastischen Anschlagring 10 oder mit elastischen Ringsegmenten verbunden. Für die Herstellung der Formringe 7 und 8 eignen sich feste Werkstoffe. Die innere Hülse 1 ist in der Fig. 3 in der Vormontagelage des Lagers im unbelasteten Zustand mit verkanteter Längsachse 5a dargestellt. Der Vorteil der in den Fig. 3 und 4 dargestellten Ausführungsform besteht vor allem darin, dass der Gelenkkörper lediglich auf der inneren Hülse 1 festhaftend angeordnet wird, während die äussere Hülse 2 am Innenumfang nicht vorbehandelt werden muss für eine festhaftende Verbindung mit dem Werkstoff des Gelenkkörpers 3. Die Reibhaftung zwischen dem Gelenkkörper 3 und der äusseren Hülse 2 erfolgt bei diesem Ausführungsbeispiel ausschliesslich durch radiale Verspannung des Gelenkkörpers 3 mittels der Formringe 7 und 8.

Ein besonders kostengünstig herstellbares Ausführungsbeispiel ist in den Fig. 5 bis 8 dargestellt. Hiernach sind die Enden der äusseren Hülse 2 abgestuft ausgeführt, wobei verkürzte Bereiche etwa in Überdeckung mit den hohlen Ausformungen 4 des Gelenkkörpers 3 vorgesehen sind. Im Bereich des vollen Materials des Gelenkkörpers 3 sind schürzenartige Verlängerungen der äusseren Hülse 2 in Anlehnung an dem Beispiel nach den Fig. 1 und 2 kalibriert und mit Schrägenanprägungen 6 ausgestattet, die parallel zu den Verjüngungen der Aufweitung der inneren Hülse 1 liegen. Ausserdem ist der Werkstoff des elastischen Gelenkkörpers aus der äusseren Hülse herausgeführt und zu elastischen Anschlagsegmenten 10 geformt. Die äussere Hülse 2 ist ausserdem an zwei sich diametral gegenüberliegenden Stellen mit Kompensationsschlitzen 11 versehen, um das Einpressen der äusseren Hülse 2 in einen Lagerkörper 12 unter Verringerung ihres Aussendurchmessers zu ermöglichen. Nach der Montage ist die durch die Schlitze 11 gebildete Stossfuge geschlossen, wie es aus der Fig. 8 zu ersehen ist.

**Patentansprüche**

1. Elastisches Lager mit einem zwischen einer äusseren Hülse und einer ringförmigen inneren Hülse eingespannten Gelenkkörper aus elastischem Werkstoff, der in seiner Ursprungsform aussen etwa zylindrisch ist, an seinen Stirnseiten partiell hohle bis in die Gelenkmitte reichende Ausformungen in zueinander winkelversetzter Anordnung aufweist und im Bereich des diesen Ausformumgen parallel zur Gelenkachse gegenüberliegenden vollen Materials vorgespannt ist, dadurch gekennzeichnet, dass die innere Hülse (1) in der Gelenkmitte eine sich nach beiden Seiten verjüngende Ausweitung aufweist und dass eine die Vorspannung von aussen bewirkende Schrägfläche (6) an dem jeweiligen Ende der äusseren Hülse (2) und die Verjüngung der Ausweitung der inneren Hülse (1) im Schnitt durch eine Achsebene des Gelenkes etwa parallel zueinander verlaufen.

2. Elastisches Lager mit Merkmalen nach dem Oberbegriff des Patentanspruches 1, dadurch gekennzeichnet, dass die innere Hülse in der Gelenkmitte eine sich nach den beiden Seiten verjüngende Ausweitung aufweist und dass Formringe (7, 8) zum axialen und radialen Vorspannen des Gelenkkörpers (3) vorgesehen sind, die jeweils eine innere, sich im Durchmesser nach den Stirnseiten des Lagers verjüngende Schrägfläche aufweisen, die im Schnitt durch eine Achsebene etwa parallel zu der jeweiligen Schrägfläche der Ausweitung der inneren Hülse verlaufen und den elastischen Gelenkkörper im Bereich des vollen Materials vorspannen.

3. Elastisches Lager nach den Ansprüchen 1 und 2, gekennzeichnet durch eine radiale und axiale Vorspannung des Gelenkkörpers (3) im Bereich des vollen Materials.

4. Elastisches Lager nach den Ansprüchen 1 bis 3, dadurch gekennzeichnet, dass an den Stirnseiten des Gelenkkörpers (3) unterschiedlich profilierte Ausnehmungen vorgesehen sind.

5. Elastisches Lager nach den Ansprüchen 1 bis 4, dadurch gekennzeichnet, dass an den Stirnseiten des Gelenklagers in Achsrichtung ausserhalb der Enden der äusseren Hülse (2) elastische Anschläge (10) aus elastischem Werkstoff vorgesehen sind.

6. Elastisches Lager nach Anspruch 5, dadurch gekennzeichnet, dass die Anschläge (10) ringsegmentförmig ausgebildet und an Teilen des Gelenkkörpers ausserhalb der Enden der äusseren Hülse (2) einstückig angeformt sind.

### Claims

1. Resilient bearing comprising a joint of a resilient material which is clamped between an external sleeve and an annular internal sleeve, the external original shape of which joint is approximately cylindrical, which comprises at its front ends partially hollow formations extending into the centre of the joint and arranged in an angular staggered manner with respect to one another, and which is pre-stressed in the area of the solid material opposite these formations and parallel with the joint axis, characterised in that, in the centre of the joint, the internal sleeve (1) comprises an enlargement which tapers on both sides, and that an inclined surface (6), which causes the pre-stressed condition from the outside, at the respective ends of the external sleeve (2) and the taper of the enlargement of the internal sleeve (1) extend approximately parallel to one another in the section through an axial plane of the joint.

2. Resilient bearing with the characteristic features according to the classifying part of claim 1, characterised in that, in the centre of the joint, the internal sleeve comprises an enlargement which tapers on both sides, and that formed rings (7, 8) are provided for the axial and radial pre-stressing of the joint and in each case comprise an internal inclined surface, the diameter of which tapers towards the front ends of the bearing, which extends approximately parallel to the respective inclined surface of the enlargement of the internal sleeve in the section through an axial plane and which pre-stresses the resilient joint in the area of the solid material.

3. Resilient bearing according to claim 1 and 2, characterised by radial and axial pre-stressing of the joint (3) in the area of the solid material.

4. Resilient bearing according to claims 1 to 3, characterised in that recesses having different profiles are provided at the front ends of the joint (3).

5. Resilient bearing according to claims 1 to 4, characterised in that resilient stops (10) of a resilient material are provided at the front ends of the joint bearing in the axial direction and outside the ends of the external sleeve (2).

6. Resilient bearing according to claim 5, characterised in that the stops (10) are in the shape of annular segments and formed onto parts of the joint in one piece outside the ends of the external sleeve (2).

### Revendications

1. Palier élastique comportant un fourreau extérieur et un fourreau intérieur annulaire entre lesquels est enserré un corps d'articulation en matériau élastique qui dans sa forme initiale est extérieurement approximativement cylindrique et présente sur ses faces frontales des évidements angulairement décalés et partiellement creux s'étendant jusqu'au milieu de l'articulation et est précontraint dans une zone de matériau plein opposée à ces évidements parallèlement à l'axe d'articulation, caractérisé en ce que le fourreau intérieur (1) présente au milieu de l'articulation un évasement se rétrécissant vers les deux côtés, et en ce qu'une surface oblique (5) produisant de l'extérieur la précontrainte à chacune des extrémités du fourreau extérieur (2) et le rétrécissement de l'évasement du fourreau intérieur (1) sont pratiquement parallèles en coupe par un plan axial de l'articulation.

2. Palier élastique avec les caractéristiques du préambule de la revendication 1, caractérisé en ce que le fourreau intérieur (1) présente au milieu de l'articulation un évasement se rétrécissant vers les deux côtés et en ce que des anneaux profilés (7, 8) sont disposés pour assurer la précontrainte axiale et radiale du corps d'articulation et présente chacun une surface oblique intérieure dont le diamètre diminue en direction des faces frontales du palier, qui en coupe par un plan axial, est pratiquement parallèle à la surface oblique correspondante de l'évasement du fourreau intérieur et qui exerce une précontrainte sur le corps d'articulation élastique dans la zone en matériau plein.

3. Palier élastique selon les revendications 1 et 2, caractérisé par un précontrainte radiale et axiale du corps d'articulation (3) dans la zone en matériau plein.

4. Palier élastique selon les revendications 1 à 3, caractérisé en ce qu'il est prévu sur les faces frontales du corps d'articulation (3) des évidements de profils différents.

5. Palier élastique selon les revendications 1 à 4, caractérisé en ce qu'il est prévu sur les faces frontales du palier, exialement à l'extérieur des extrémités du fourreau extérieur (2), des butées (10) élastiques en matière élastique.

6. Palier élastique selon la revendication 5, caractérisé en ce que les butées (10) sont des segments annulaires et sont formées en une seule pièce avec des parties du corps d'articulation, à l'extérieur des extrémités du fourreau extérieur (2).

FIGUR 1

FIGUR 3

FIGUR 2

FIGUR 4

FIGUR 5

FIGUR 7

FIGUR 6

FIGUR 8